# EUROPEAN PATENT APPLICATION

(11) **EP 0 969 371 A1**
(43) Date of publication of application: **05.01.2000**
(21) Application number: 99201977.8
(22) Date of filing: 19.06.1999
(51) Int. Cl.: G06F 11/00, G06F 3/06

(54) **Verifying configuration of storage devices based upon device indentifiers**

(30) Priority: 30.06.1998 US 106951
(71) Applicant: SUN MICROSYSTEMS, INC., Palo Alto, California 94303 (US)
(72) Inventor: Nazari, Siamak, Arcadia, CA 91006 (US); Hisgen, Andrew L., Mountain View, CA 94041 (US); Wilhelmy, Carol J., San Mateo, CA 94403 (US)
(74) Representative: Hanna, Peter William Derek

(57) **Abstract**

One embodiment of the present invention provides a method and an apparatus for verifying configuration of storage devices (**114, 116**) in a computer system (**100**) based upon device identifiers (**308**) within the storage devices. The method and apparatus provide a computer system that reads (**402**) device identifiers from storage devices in the computer system, and uses the device identifiers to create (**406**) a mapping (**202**) associating the device identifiers with corresponding physical paths (310, 312, 314) to the storage devices. Upon reconfiguration of the storage devices, the computer system again reads (**704, 804**) device identifiers from storage devices in order to verify that the system was reconfigured correctly. In a variation on this embodiment, the computer system additionally associates (**404**) a logical path with each storage device. When the computer system subsequently receives an access request for the storage device directed to the logical path, the computer system translates (**606**) the logical path into an associated physical path, and uses (**506**) the physical path to access (**500**) the storage device.

## Description

### BACKGROUND

### Field of the Invention

The present invention relates to storage devices in computer systems. More specifically, the present invention relates to a method and an apparatus for verifying the location of a storage device in a computer system based upon an identifier stored on the storage device.

### Related Art

Many computer systems include multiple storage devices, such as disk drives or tape drives, for storing large amounts of data; these devices are useful for computer systems that operate as file servers or database servers. Providing multiple storage devices additionally makes it possible to distribute data from a single file across the multiple storage devices for high bandwidth parallel retrieval. For example, RAID (Redundant Arrays of Inexpensive Disks) systems often support parallel retrieval from 16 or 32 disk drives. However, providing multiple storage devices can give rise to errors during system reconfiguration. For example, when a technician replaces a disk drive (or disk cable), the technician may inadvertently switch the wrong disk drive (or the wrong cable) causing the wrong disk drive to end up on a particular physical path. This type of error is likely to occur in computer systems with large numbers of disk drives because the disk drives are often packed tightly together and they are packaged in identical sealed units. Furthermore, in computer systems with large numbers of disk cables, one set of disk cables can easily be mistaken for another set of disk cables.

Errors in computer system reconfiguration can also take place in other ways. For example, if a new disk controller is installed, or the operating system is upgraded, the physical pathnames to storage devices can change. Again, the wrong storage device can end up on a particular physical path.

Present computer systems have no way of determining when a reconfiguration error of this type has occurred. Consequently, when the computer system subsequently reads data from the misplaced disk drive, this data will be erroneous. More importantly, when the computer system subsequently writes data to the misplaced disk drive, it is likely to overwrite data on the misplaced disk drive. This situation can be especially troublesome in RAID systems in which data for a single file is distributed across multiple disk drives. Consequently, corrupting data on a single disk drive may corrupt files that are distributed across the multiple disk drives.

What is needed is a computer system that automatically detects improper reconfiguration of storage devices.

### SUMMARY

One embodiment of the present invention provides a method and an apparatus for verifying configuration of storage devices in a computer system based upon device identifiers within the storage devices. The method and apparatus provide a computer system that reads device identifiers from storage devices in the computer system, and uses the device identifiers to create a mapping associating the device identifiers with corresponding physical paths to the storage devices. Upon reconfiguration of the storage devices, the computer system again reads device identifiers from storage devices in order to verify that the system was reconfigured correctly.

In a variation on this embodiment, the computer system additionally associates a logical path with each storage device. When the computer system subsequently receives an access request for the storage device directed to the logical path, the computer system translates the logical path into an associated physical path, and uses the physical path to access the storage device.

### BRIEF DESCRIPTION OF THE FIGURES

FIG. 1 is a diagram illustrating a computer system 100 including multiple disk drives in accordance with an embodiment of the present invention.
FIG. 2 is a diagram illustrating the structure of the software architecture within computer system 100 in accordance with an embodiment of the present invention.
FIG. 3A illustrates a mapping between a physical path and a logical path in accordance with an embodiment of the present invention.
FIG. 3B illustrates the internal structure of mapping table 202 from FIG. 2 in accordance with an embodiment of the present invention.
FIG. 4 is a flow chart illustrating the process of creating mapping table 202 in accordance with an embodiment of the present invention.
FIG. 5 is a flow chart illustrating the process of opening a storage device in accordance with an embodiment of the present invention.
FIG. 6 is a flow chart illustrating the processing of a request to a storage device in accordance with an embodiment of the present invention.
FIG. 7 is a flow chart illustrating the process of verifying that a storage device was correctly added to the computer system in accordance with an embodiment of the present invention.
FIG. 8 is a flow chart illustrating the process of verifying that a storage device was correctly replaced in accordance with an embodiment of the present invention.

### DETAILED DESCRIPTION

### Description of Computer System

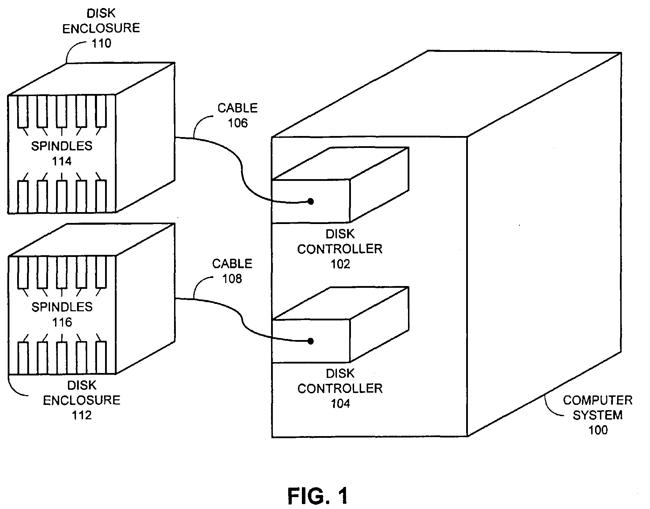

FIG. 1 is a diagram illustrating a computer system 100 including multiple disk drives in accordance with an embodiment of the present invention. Computer system 100 may be any type of computer system, including but not limited to, a personal computer system, a computer workstation, or a mainframe computer system. Note that FIG. 1 illustrates the portion of computer system 100 that includes disk controllers 102 and 104. Not shown in FIG. 1 are the other internal components of computer system 100, such as a processor and semiconductor memory.

Computer system 100 includes disk controllers 102 and 104, which connect through cables 106 and 108 to disk enclosures 110 and 112, respectively. Disk controllers 102 and 104 include circuitry and software to control a number of disk spindles within disk enclosures 110 and 112. More specifically, disk controller 102 controls spindles 114 in disk enclosure 110, and disk controller 104 controls spindles 116 in disk enclosure 112. (Note that a disk spindle is a rotating unit containing magnetic or optical storage.)

A number of errors can occur during reconfiguration of the system components illustrated in FIG. 1. (1) A technician may accidentally replace the wrong disk spindle with a new disk spindle. In this case, the computer system will continue to operate as if the erroneously replaced disk had not been replaced. This will likely cause erroneous data to be read from the new disk and may cause erroneous overwriting of data on the new disk. (2) A technician may disconnect cables 106 and 108 from computer system 100 in order to service computer system 100, and may erroneously reconnect cable 106 to disk controller 104 and cable 108 to disk controller 102. Again, this will cause erroneous read and write operations to disks in enclosures 110 and 112. (3) Other erroneous reconfigurations are possible. For example, a technician may remove disk controllers 102 and 104 for servicing, and may replace them into the wrong locations in computer system 100. This again can have undesirable consequences. Note that the above erroneous reconfigurations create problems because the wrong disk drive ends up being connected to the wrong physical path in computer system 100.

### Description of Device Driver

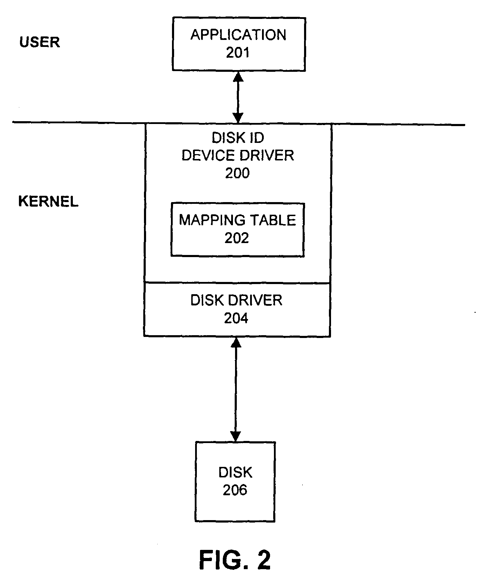

FIG. 2 is a diagram illustrating the structure of the software architecture within computer system 100 in accordance with an embodiment of the present invention. The software executing on computer system 100 includes both a user space and a kernel space. The user space includes user application programs such as application 201. The kernel or system space includes software that controls a number of system functions. This includes controlling access to storage devices, such as disk 206. More specifically, the kernel space includes disk driver 204, which communicates with and controls the operation of disk 206. This may involve controlling disk 206 through a disk controller, such as disk controllers 102 and 104 in FIG. 1.

In one embodiment of the present invention, application 201 communicates with disk driver 204 through disk ID device driver 200. Disk ID device driver (DID driver) 200 is a layer that is inserted between disk driver 204 and the user space in order to facilitate address translations between logical path names and physical path names for disk drives. DID driver 200 receives disk accesses directed to logical path names from application 201 and translates the disk accesses into physical path names that are forwarded to disk driver 204. Disk driver 204 is a conventional disk driver that understands physical path names, but not logical path names. In another embodiment, DID driver 200 and disk driver 204 are combined into a single disk driver.

DID driver 200 includes mapping table 202, which contains associations between serial numbers, physical path names and logical path names for individual disk drives. Note that disk drivers typically contain serial numbers that can be accessed by reading status information from the disk drives. This makes it possible to identify disk drives based upon serial numbers contained in the disk drives instead of physical path names.

The system illustrated in FIG. 2 operates as follows. Application 201 accesses a storage device by passing a logical pathname along with an access request to DID driver 200, which converts the logical pathname into a physical pathname by performing a lookup in mapping table 202. DID driver 200 passes the modified request including the physical pathname to disk driver 204. Disk driver 204 processes the request and generates a series of commands for disk 206. This process may involve communication with an intervening disk controller, which is not shown.

### Description of Mapping Between Logical Path and Physical Path

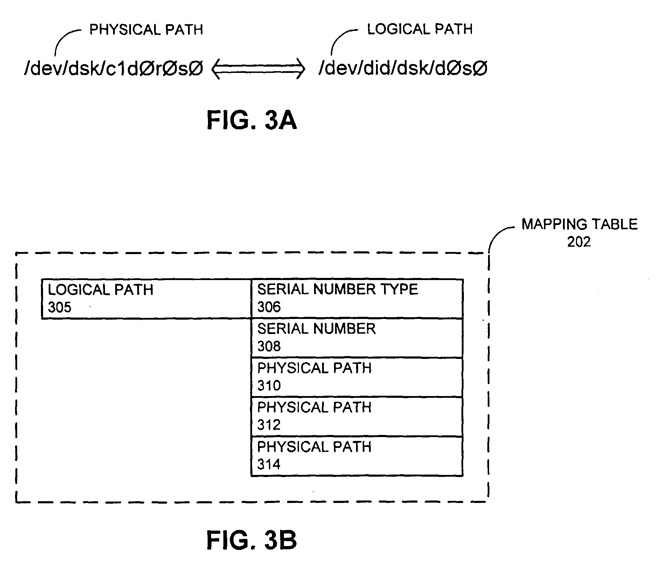

FIG. 3A illustrates a mapping between a physical path and a logical path in accordance with an embodiment of the present invention. In this mapping, the physical path "/dev/dsk/c1d0r0s0" is mapped to logical path "/dev/did/dsk/d0s0."

In the physical path, "c1" specifies a particular disk controller, such as disk controller 102 from FIG. 1. "d0" specifies a particular disk spindle controlled by the disk controller, and "r0" is reserved for functions unrelated to controlling disk drives. Finally, "s0" specifies a particular slice on disk spindle "d0." A slice is a portion of a disk that is comprised of a plurality of sectors, but is typically smaller than a disk partition. For example, a spindle is typically divided into 8 or 16 slices.

In the logical path, "did" specifies that the address is a logical address to be interpreted by DID driver 200. There is no corresponding specifier for a disk controller. "d0" specifies a logical disk spindle, and "s0" specifies a particular slice within the spindle. During the mapping process, a logical spindle/slice pair "d0s0" is mapped onto a physical path "c1d0r0s0." This is done by looking up the physical path using the logical path in mapping table 202, which is described in more detail below.

### Description of Mapping Table

FIG. 3B illustrates the internal structure of mapping table 202 in accordance with an embodiment of the present invention. Mapping table 202 includes a number of entries, wherein each entry associates a logical path with a serial number for a storage device and at least one physical path to the storage device. FIG. 3B illustrates a single entry within mapping table 202 corresponding to a single logical path. Note that mapping table 202 contains a similar entry for each logical path.

In FIG. 3B, logical path 305 is associated with a record containing serial number type 306, serial number 308, physical path 310, physical path 312 and physical path 314. Serial number type 306 specifies the format for the serial number to facilitate handling and comparison of the serial number, and possibly to facilitate retrieval of the serial number. Serial number 308 contains the actual serial number that is read from the storage device.

Logical path 305 is additionally associated with physical paths 310, 312 and 314. In the illustrated example, there are multiple physical pathways to the storage device in case one of the physical pathways fails. In another embodiment, there is only a single physical path to each storage device.

### Mapping Table Creation

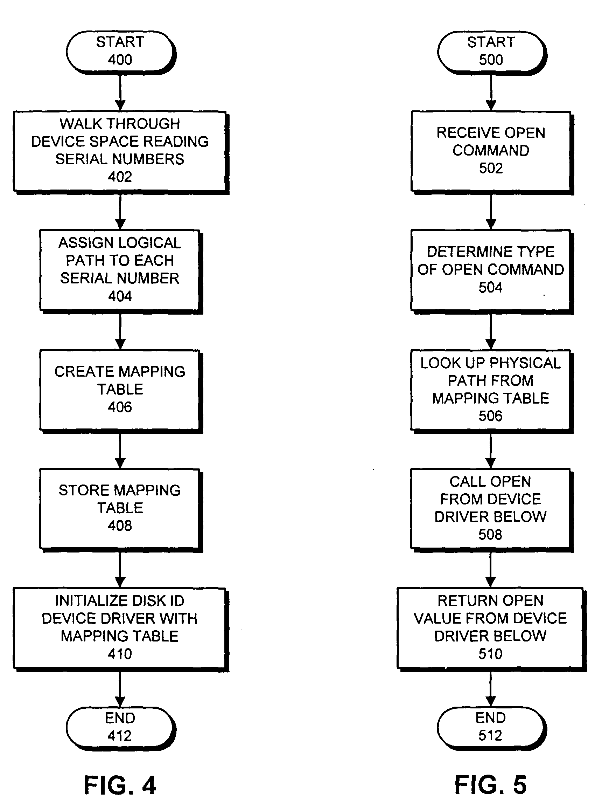

FIG. 4 is a flow chart illustrating the process of creating mapping table 202 in accordance with an embodiment of the present invention. The system starts at state 400 and proceeds to state 402. In state 402, the system walks through the device space reading serial numbers of any devices that are detected. This entails looking through all possible physical path names to determine which devices are present, and reading serial numbers from the devices. Under the SCSI standard, a serial number for a device can be accessed by reading SCSI inquiry page 5 for the device. Note that if there are multiple physical pathways to a storage device, a number of different physical pathnames may be associated with a single serial number. Next, the system proceeds to state 404. In state 404, the system assigns a logical path to each serial number. In one embodiment of the present invention, this entails assigning a DID number to each unique serial number that is detected. The system next advances to state 408.

In state 408, the system creates a mapping table from the associations made is preceding steps 402 and 404. In one embodiment of the present invention, this mapping table assumes the form of mapping table 202 illustrated in FIG. 3B. However, in general a mapping table can assume a number of different forms. The only important features are an association of physical pathnames to device identifiers, and possibly an association of logical pathnames to device identifiers. The system next proceeds to state 408.

In state 408, the system stores the mapping table created in state 406 for later retrieval. In one embodiment of the present invention, this mapping table is stored to non-volatile storage. For example, the mapping table can be stored to a file (or a database) on a magnetic disk drive. This stored file can be retrieved after subsequent system reconfiguration to verify that the system was reconfigured correctly. The system next proceeds to state 410. In state 410, the system uses the mapping table to initialize DID driver 200 illustrated in FIG. 2. This initialization process entails loading the mapping table 202 into DID driver 200 so that DID driver 200 can use the mapping table 202 to translate logical pathnames into physical pathnames. The system next proceeds to state 412, which is an end state. The above process takes place when a system is initially configured, and each time the system is completely reconfigured. If a slight modification to the system is subsequently made, such as adding or swapping a single disk drive, the system can simply modify the mapping table instead of creating the mapping table from scratch. During subsequent system booting operations, the mapping table 202 is automatically loaded from the above-mentioned file into DID device 200.

### Opening Storage Device

FIG. 5 is a flow chart illustrating the process of opening a storage device in accordance with an embodiment of the present invention. In this embodiment, the mapping from a logical pathname for a slice to the physical pathname for the slice is performed upon opening of the slice. The system starts at state 500 and proceeds to state 502. In state 502, the system receives an open command from an application in user space, such as application 201 from FIG. 2. The system next proceeds to state 504. In state 504, the system determines what type of open command has been called. In this embodiment, the open command can either specify an opening of an administrative node from DID driver 200, or an opening of a slice specified by a logical pathname. The opening of the administrative node does not involve the mapping process, so it will not be discussed further. The system next proceeds to state 506. In state 506, the system uses the logical pathname to the slice to look up a physical pathname to the disk serving the slice. In one embodiment of the present invention, this lookup involves a file lookup into non-volatile storage. The system next proceeds to state 508. In state 508, the system calls an "open command" from the device drive below. Referring to FIG. 2, this corresponds to calling an open command from, disk driver 204. This open command is made using the physical pathname gained from examining mapping table 202. The system next proceeds to state 510. In state 510, the system waits for the open command to return from disk driver 204, and then returns the open value to the calling application. The system next proceeds to state 512, which is an end state. The above process is repeated each time a slice is opened.

### Accessing Storage Device

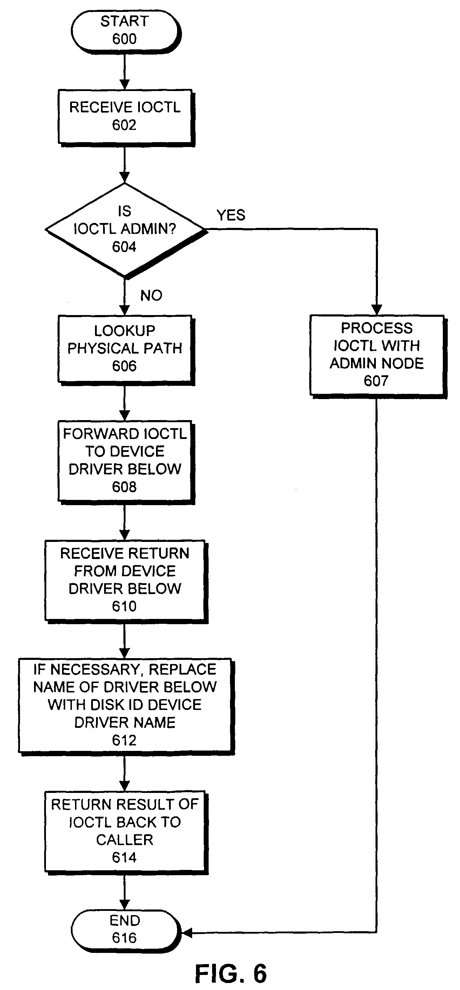

FIG. 6 is a flow chart illustrating the processing of an access request to a storage device in accordance with an embodiment of the present invention. The system starts at state 600 and proceeds to state 602. In state 602, the system receives an "IOCTL" (I/O control) command from an application such as application 201 from FIG. 2. The system next proceeds to state 604. In state 604, the system determines whether or not the IOCTL specifies an administrative operation or a data access.

If the IOCTL specifies an administrative operation, the system proceeds to state 607. In state 607, the system uses an administrative node within DID driver 200 to process the administrative command. After the IOCTL is complete, the system proceeds to state 616, which is an end state.

If the IOCTL specifies a data access, the system proceeds to state 606. In state 606, the system uses a logical pathname from the IOCTL command to lookup a physical path to the storage device. Note that this lookup does not involve a time-consuming access to secondary storage as was performed during the "open" command. Instead, the translation is performed with a fast array lookup into semiconductor memory. The system next proceeds to state 608. In state 608, the system forwards to IOCTL command to disk driver 204 from FIG. 2. The system next proceeds to state 610. In state 610, the system receives a return from the device driver below. The system next proceeds to state 612. In state 612, if necessary, the result from disk driver 204 is modified so that the name of disk driver 204 is replaced with the name of DID driver 200. This is done to make it appear as though the command is returning from DID driver 200 instead of from disk driver 204. The system next proceeds to state 614. In state 614, the system returns the result of the IOCTL back to the caller, which is application 201 from FIG. 2. The system finally proceeds to state 616, which is an end state. The above process is repeated for each subsequent IOCTL command.

### Verifying Addition of Storage Device

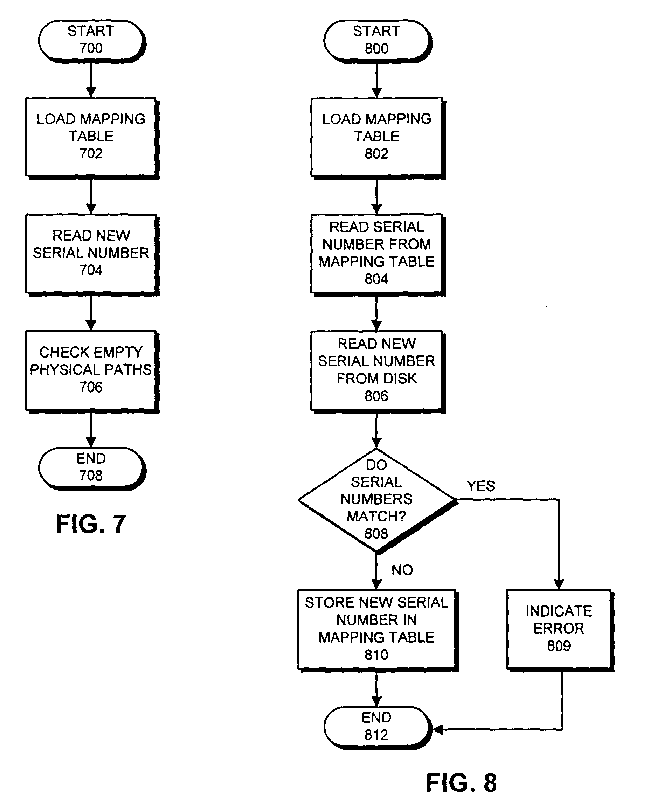

FIG. 7 is a flow chart illustrating the process of verifying that a storage device was correctly added to the computer system in accordance with an embodiment of the present invention. After the storage device is added to the system, the system starts in state 700 and proceeds to state 702. In state 702, the system loads mapping table 202 from non-volatile storage into DID driver 200 in FIG. 2. The system next proceeds to state 704. In state 704, the system attempts to read a serial number for the new storage device by attempting to read from the physical paths upon which the new storage device should have been attached. If the serial number cannot be read, the system indicates an error condition. Otherwise, the system adds the new serial number to mapping table 202. Next, the system proceeds to state 706. In state 706, the system checks unused physical paths to ensure that the new drive was not inadvertently added to the unused physical paths. The system next proceeds to state 708, which is an end state. The above process is repeated each time a new storage device is added to the system.

### Verifying Replacement of Storage Device

FIG. 8 is a flow chart illustrating the process of verifying that a storage device was correctly replaced in accordance with an embodiment of the present invention. The system starts at state 800 and proceeds to state 802. In state 802, the system loads mapping table 202 from non-volatile storage into DID driver 200 in FIG. 2. The system next proceeds to state 804. In state 804, the system reads a serial number corresponding to the replaced storage device from mapping table 202. The system next proceeds to state 806. In state 806, the system attempts to read a new serial number from a physical path to which the new disk drive should have been attached. Next, the system proceeds to state 808. In state 808, the system asks if the serial numbers match. If so, the system proceeds to state 809. In state 809, the system indicates an error condition because the fact that the serial numbers match indicates the old disk drives was not correctly replaced with a new disk drive. The system next proceeds to state 812, which is an end state. If the serial numbers do not match, the system proceeds to state 810. In state 810, the system stores the new serial number for the new storage device into mapping table 202. The system next proceeds to state 812, which is an end state. The above process is repeated each time a storage device is replaced in the system.

While the invention has been particularly shown and described with reference to embodiments thereof, those skilled in the art will understand that the foregoing and other changes in form and detail may be made therein without departing from the scope of the present invention. Accordingly, the above disclosure is not intended to limit the invention.

## Claims

1. A method for verifying a configuration of a plurality of storage devices (**114, 116**) in a computer system (**100**) based upon device identifiers (**308**) within the plurality of storage devices, comprising, when the system is initially configured, and each time the system is about to be completely reconfigured;
reading (**402**) device identifiers (**308**) from the plurality of storage devices (**114, 116**) located on physical paths (**310, 312, 314**) in the computer system;
creating (**406**) a mapping (**202**) associating the device identifiers from the plurality of storage devices with the physical paths to the plurality of storage devices, and following reconfiguration;
loading (**410, 702, 802**) said mapping (**202**);
verifying (**700, 800**) that the plurality of storage devices has been reconfigured correctly by attempting to read (**704, 804**) at least one device identifier from a physical path in the computer system.

2. The method of claim 1, further comprising, when creating (**406**) said mapping (**202**);
associating (**404**) a logical path (**305**) to a storage device with a physical path (**310, 312, 314**) to the storage device, and subsequently;
receiving (**600**) an access request for the storage device directed to the logical path;
translating (**606**) the logical path into the physical path associated with the storage device; and
accessing (**500**) the storage device using (**506**) the physical path.

3. The method for claim 1 or claim 2, such that if a slight modification to the system configuration is subsequently made, such as adding or swapping a single storage device, said creating step (**406**) is replaced by the step of modifying a previously created and loaded mapping (**202**).

4. The method of any one of claims 1 to 3, further comprising indicating an error condition (**809**) if the plurality of storage devices have not been reconfigured correctly.

5. The method of any one of claims 1 to 4, wherein the plurality of storage devices (**114,** 116) include disk drives.

6. The method of any one of claims 1 to 5, such that when a new storage device is added to the computer system during said reconfiguration, said verifying step comprises; attempting to read (**704**) a device identifier for the new storage device from a physical location into which the new storage should have been placed.

7. The method of any one of claims 1 to 5, such that when a first storage device is replaced on a first physical path in the computer system during said reconfiguration, said verifying step comprises; attempting to read (**804**) a device identifier from the first physical path and verifying (**808**) that the device identifier does not match the device identifier for the first storage device.

8. The method of claim 7, wherein attempting to read the device identifiers (**306**) comprises attempting to read (**804**) device identifiers from all available physical paths (**310, 312, 314**) in the computer system.

9. The method of any one of claims 1 to 8, wherein the computer system (**100**) includes a distributed computing system with multiple computing nodes.

10. The method of any one of claims 1 to 9, further comprising storing (**408**) the mapping (**202**) in non-volatile storage in the computer system.

11. The method of any one of claims 1 to 10, wherein reading device identifiers (**306**) from the plurality of storage devices (**114, 116**) includes reading (**402**) serial numbers from the plurality of storage devices.

12. A computer readable storage medium storing instructions that when executed by a computer cause the computer to perform a method for verifying a configuration of a plurality of storage devices (**114, 116**) in a computer system (**100**) based upon device identifiers (**308**) within the plurality of storage devices, comprising when the system is initially configured, and each time the system is about to be completely reconfigured:
reading (**402**) device identifiers (**308**) from the plurality of storage devices (**114, 116**) located on physical paths (**310, 312, 314**) in the computer system;
creating (**406**) a mapping (**202**) associating the device identifiers from the plurality of storage devices with the physical paths to the plurality of storage devices, and following reconfiguration;
loading (**410, 702, 802**) said mapping (**202**);
verifying (**700, 800**) that the plurality of storage devices has been reconfigured correctly by attempting to read (**704, 804**) at least one device identifier from a physical path in the computer system.

13. A computer system (**100**) that verifies a configuration of a storage device in the computer system based upon device identifiers (**308**) within the plurality of storage devices (**114, 116**), comprising:
a processor;
a storage device located on a physical path (**310, 312, 314**) in the computer system;
an identification mechanism that reads (**402**) a device identifier from the storage device;
a mapping mechanism, in communication with the identification mechanism, that creates (**406**) a mapping (**202**) associating the device identifier from the storage device with the physical path to the storage device; and
a verification mechanism that verifies (**700, 800**) that the storage device has been reconfigured correctly by attempting to read (**704, 804**) at least one device identifier.

14. The computer system of claim 13, wherein the mapping mechanism is configured to associate (**404**) a logical path (**305**) for the storage device with the physical path to the storage device, and further comprising:
a receiving mechanism that receives (**600**) an access request for the storage device directed to the logical path for the storage device;
a translating mechanism that translates (**606**) the logical path for the storage device into the physical path to the storage device; and
an access mechanism that accesses (**500**) the storage device using (**506**) the physical path of the storage device.

15. The computer system of claim 13 or claim 14, further comprising and error indicating mechanism that indicates (**809**) an error condition if the storage device has not been reconfigured correctly.

16. The computer system of any one of claims 13 to 15, wherein the storage device (**114, 116**) includes a disk drive.

17. The computer system of any one of claims 13 to 16, wherein the verification mechanism is configured verify that a new storage device has been added to the computer system by attempting to read (**704**) a device identifier for the new storage device from a physical location into which the new storage should have been placed.

18. The computer system of any one of claims 13 to 16, wherein the verification mechanism is configured verify a replacement of a first storage device on a first physical path in the computer system by attempting to read (**804**) a device identifier from the first physical path and verifying (**808**) that the device identifier does not match the device identifier for the first storage device.

19. The computer system of claim 18, wherein the identification mechanism attempts to read (**804**) device identifiers (**306**) from all available physical paths (**310, 312, 314**) in the computer system.

20. The computer system of any one of claims 13 to 19, wherein the computer system (**100**) includes a distributed computing system with multiple computing nodes.

21. The computer system of any one of claims 13 to 20, further comprising non-volatile storage for storing (**408**) the mapping (**202**).

22. The computer system of any one of claims 13 to 21, wherein the identification mechanism is configured to read (**402**) a serial number from the storage device.

23. A computer program encoding a set of computer instructions for verifying a configuration of a plurality of storage devices (**114, 116**) in a computer system (**100**) based upon device identifiers (**308**) within the plurality of storage devices, which when running on acomputer is adapted to perform the method as claimed in any one of claims 1 to 11.
